# EUROPÄISCHE PATENTANMELDUNG

(11) **EP 2 085 716 A2**
(43) Veröffentlichungstag der Anmeldung: **05.08.2009**
(21) Anmeldenummer: 09450027.9
(22) Anmeldetag: 30.01.2009
(51) Int. Cl.: F24J 2/46, F24J 2/52

(54) **Solarwanne**

(30) Priorität: 01.02.2008 AT 6608 U
(71) Anmelder: Rinner, Michael, 9300 St. Veit/Glan (AT); Popotnig, Valentin, 9314 Launsdorf (AT)
(72) Erfinder: Rinner, Michael, 9300 St. Veit/Glan (AT); Popotnig, Valentin, 9314 Launsdorf (AT)
(74) Vertreter: Pawloy, Peter Michael

(57) **Zusammenfassung**

Beschrieben wird eine Wanne (1) aus Verbundstoff zur Aufnahme von Solar- oder Photovoltaikelementen und der Verbundstoff etwa 5 bis etwa 90 % pflanzliche Fasern (7) aufweist.

## Beschreibung

Die Erfindung betrifft eine Wanne zur Aufnahme von Solar- oder Photovoltaikelementen aus einem Verbundstoff.

Weiters betrifft die Erfindung ein Verfahren zur Herstellung einer derartigen Wanne.

Solarzellen und/oder Photovoltaikelemente zum Auffangen der Sonnenenergie werden gängigerweise in einer Wanne untergebracht. Solche Wannen sind zumeist aus Metall, insbesondere Aluminium, oder auch aus Kunststoff gefertigt. Beispielsweise ist eine dickwandige Wanne aus Polycarbonat mit einer Größe von 2,52 m² und einem Gewicht von 43 kg bekannt. In seltenen Fällen wird auch Glas verwendet.

In jüngster Zeit werden weiters Verbundstoffe bzw. Verbundsysteme als Träger für Sonnenkollektoren, wie in der US 6,196,216 B1, der EP 1 318 012 A1 und in der WO 2006/105895 A1 beschrieben, verwendet.

Aus der DE 27 13 628 A1 ist ein Trägerelement für Solarkollektoren aus einem mit einer Kunststoffschicht überzogenen Füllkörper aus Kunststoffhartschaum, insbesondere aus Polyurethan, bekannt, wobei in dem Füllkörper ein Fasergebilde aus langfaserigen Mineral- oder Synthesefasern eingebettet ist.

Eine thermoplastische Formmasse aus einem Emulsionspolymerisat, Polycarbonat und als Additiv beigemengten faserförmigen Füllstoffe, wie Mineralfasern, ist aus der DE 198 46 244 A1 bekannt, die u.a. auch für Teile von Solaranlagen einsetzbar ist.

Aus der FR 2 846 022 A1 ist ein isolierendes Wandelement bekannt, welches an seiner Außenseite ein Solarpaneel aufnehmen kann. Zu Wärmedämmzwecken ist ein abgetrennter Teil des Inneren des Wandelements mit natürlichen Materialien, wie Hanf, Leinen oder anderen Wollfasern, gefüllt.

Natürliche Materialien, wie natürliche Fasern, finden auch auf anderen Gebieten Verwendung, wie beispielsweise in der Herstellung von Konsumgütern, insbesondere von Behältnissen, wie Trinkbechern, Blumentöpfen oder auch Koffer, sowie von Bauelementen (DE 196 18 271 A1, DE 20 2005 006 445 U1).

Ein als Sonnenkollektor verwendbarer Formkörper aus einer Mischung aus mit Bindemitteln versetzten Fasern, Spänen aus Holz-, Mineral- oder Glasfasern, und einer aufvulkanisierten Kautschukschicht, wobei der Formkörper in einer Heißpresse hergestellt wird, ist aus der DE 3 246 541 A1 bekannt.

Die erwähnten Konstruktionen zur Unterbringung von Solarkollektoren oder Photovoltaikelementen verwenden nur ansatzweise nachwachsende Rohstoffe für ihre Herstellung. Sie sind wenig umweltfreundlich und wenig bis zur Gänze nicht abbaubar. Weiters ist die Herstellung der bekannten Konstruktionen aufgrund der verwendeten Materialien relativ (energie-)aufwendig und daher kostenintensiv.

Gängigerweise wird das Material zur Bildung der Wannen tiefgezogen oder mit einer Presse geformt. Allerdings erfordert der Formenbau der meisten der bekannten Wannen wegen der großen Formarbeit aufgrund der verwendeten Materialien entsprechend große Formradien im Bereich der Biegekanten, die für die Wannen Verlustflächen darstellen.

Weiters ist insbesondere im Falle von Wannen aus Metall nachteilig, dass das Material wärmeleitfähig ist und die Wanne durch entsprechende zusätzliche Maßnahmen, die besonders in ungewünschten Bereichen der Wannen vorgenommen werden müssen, isoliert werden muss.

Darüber hinaus sind die herkömmlichen Wannen oftmals aufgrund der höheren Dichte der verwendeten Materialien von höherem Gewicht, wodurch der Untergrund auf dem die Wanne mit Sonnenkollektor oder den Photovoltaikeinrichtungen montiert werden soll entsprechend belastbar bzw. tragfähig vorgesehen werden muss.

Die Aufgabe der vorliegenden Erfindung besteht nun darin, eine Wanne der eingangs erwähnten Art bereitzustellen, die die Vorteile der Verwendung von nachwachsenden Rohstoffen, Umweltfreundlichkeit und positiver Energiebilanz vereint und dennoch einfach herstellbar, stabil und langlebig ist.

Weiters besteht die Aufgabe der Erfindung darin, ein Verfahren zur Herstellung einer solchen Wanne zur Verfügung zu stellen, das leicht durchzuführen und kostengünstig ist.

Erfindungsgemäß wird dies dadurch gelöst, dass eine Wanne aus Verbundstoff der vorstehend genannten Art geschaffen wird, welcher Verbundstoff pflanzliche Fasern aufweist. Pflanzliche Fasern sind nachwachsende Rohstoffe, wodurch die erfindungsgemäße Wanne einen erheblichen Beitrag zur Umwelt leisten kann. Der positive Umweltbeitrag wird weiters dadurch erhöht, dass die Kosten und der Aufwand für die Herstellung der erfindungsgemäßen Wanne niedrig gehalten werden können.

Pflanzliche Fasern zeigen naturgemäß eine erhöhte Wärmedämmung, wodurch eine Einsparung der Isolierung in der Wanne erreicht werden kann. Von Vorteil ist auch, dass die Dichte des Pflanzenfasermaterials um etliches niedriger ist als die Dichte von Kunststoff, beispielsweise Polycarbonat, und die erfindungsgemäße Wanne im Vergleich zu Kunststoff- und Kunststoffverbund-Wannen dünnwandiger und leichter im Gewicht ausgestaltet werden kann. Die Wanne gemäß der Erfindung kann demnach auf sämtlichen Untergründen montiert werden ohne zusätzliche, bauliche Maßnahmen am Untergrund zur Erhöhung der Tragfähigkeit bzw. Belastbarkeit des Untergrunds vornehmen zu müssen. Da der Verbundstoff umfassend pflanzliche Fasern herstellungsbedingt geringere Verlustflächen in der Wanne bildet, kann in der erfindungsgemäßen Wanne hinreichend Platz für die Solar- und Photovoltaikelemente, Zusatzeinreichtungen sowie auch Zu- und Ableitungen geschaffen werden.

Bezüglich der Verwendung von nachwachsenden Rohstoffen und der Eigenschaften der Wanne ist vorgesehen, dass der Verbundstoff etwa 5 % bis etwa 90 % pflanzliche Fasern aufweist. Es hat sich gezeigt, dass ein Anteil zwischen etwa 40 % und etwa 70 %, vorzugsweise von etwa 60 %, an pflanzlichen Fasern im Verbundstoff besonders günstig ist. Mit einem derartigen Verbundstoff können die positiven Eigenschaften des Pflanzenmaterials zur Gänze ausgenutzt werden, wobei der Verbundstoff aber dennoch leicht zu einer stabilen Wanne verarbeitet werden kann.

Nach einem einfachen Merkmal der Erfindung ist der Verbundstoff durch ein gepresstes Faservlies gebildet.

Als pflanzliche Fasern kommen viele in Betracht, wobei bevorzugt strapazfähige Fasern herangezogen werden. Für die erfindungsgemäße Wanne können Fasern verwendet werden, die ausgewählt sind aus der Gruppe Flachs, Hanf, Sisal, Kenaf, Jute, Holz, reife Kokosnussschalenfasern und aus einer Mischung daraus. Beispielsweise ist Hanf vorteilhaft, da es eine Röhrenstruktur aufweist und aufgrund des Lufteinschlusses in den Hohlräumen der Röhren eine besonders gute Isolierung der Wanne bewirken kann. Es können eine oder mehrere Faserpflanzen verwendet werden.

Hinsichtlich der Verarbeitbarkeit und Festigkeit der Materialien und der Stabilität der Wanne hat es sich als günstig erwiesen, dass der Verbundstoff thermoplastisches oder duroplastisches Material aufweist. Dadurch können die pflanzlichen Fasern eingebettet werden und einen festen und stabilen Verbund bilden, der leicht verpress- und verformbar ist. Durch die gute und einfach zu erzielende Verformbarkeit des thermoplastischen oder duroplastischen Materials sind außerdem spezielle, kompliziertere Formen von Wannen herstellbar, da sich die Materialien an jegliche Form gut anpassen können. Weiters kann die Wanne verhältnismäßig dünnwandig, aber dennoch stabil und selbsttragend ausgebildet werden. Die Wanne kann sogar eine Wandstärke von wenigen mm, vorteilhafterweise kleiner als etwa 7 mm, bevorzugt kleiner als etwa 5 mm, aufweisen. Durch den thermoplastischen oder duroplastischen Anteil im Verbundstoff der Wanne können auch Reparaturarbeiten an der Wanne besonders leicht bewerkstelligt werden. Ferner hat das thermoplastische und das duroplastische Meterial den Vorteil, dass im Falle eines Lecks in der Wanne beispielsweise ein Verbundstoff-"Fleckerl" aufgebracht werden kann und die zu verbindenden Bereiche können, z.B. mittels eines Heißluftföhns, angeschmolzen und auf diese einfache Weise mit der Wanne verbunden werden.

Hinsichtlich der Eigenschaften des Verbundstoffs für die Wanne, der einfachen Herstellung und der Qualitäten der Wanne, ist es vorteilhaft, wenn das thermoplastische Material Polypropylen und/oder Polyethylen ist. Bezüglich des duroplastischen Materials hat sich Epoxyd- und/oder Phenolharz als gut geeignet herausgestellt.

Zum Schutz und zur Beständigkeit des Verbundstoffs gegenüber Witterung und zur Schaffung einer bioziden Wirkung, insbesondere fungizide, algizide, bakterizide Wirkung, ist es günstig, dass der Verbundstoff Additive aufweist, wobei Borsalze hierfür besonders vorteilhaft sein können.

Im Prinzip kann der Verbundstoff zur Bildung der Wanne tiefgezogen werden. Bezüglich einer einfachen und kostengünstigen Herstellung ist es auch von Vorteil, dass der Verbundstoff heiz- und/oder formgepresst ist. Durch das an sich bekannte Heiz- oder Heißpressen können die pflanzlichen Fasern in eine Matrix aus bevorzugt thermoplastischem Material auf einfache Weise eingebettet werden und so einen festen (Faser-)Verbund bilden. An sich kann der Verbundstoff gleichzeitig heiß- und zu einer Wanne formgepresst werden. Bevorgzugter jedoch wird der Verbundstoff im Anschluss an die Heißpressung formgepresst. Die anschließende Formpressung findet vorteilhafterweise unter Zuhilfenahme von kaltem Formwerkzeug statt, wodurch die gebildete Wanne ohne zusätzliche Wartezeiten, z.B. zu Aushärtezwecken des Kunststoffs, weiterverarbeitet bzw. benutzt werden kann. Im Falle der Verwendung von duroplastischem Material ist es auch möglich, nur eine Formpressung, bevorzugterweise unter Temperatureinfluss, vorzunehmen; auch hierbei wird das Pflanzenfasermaterial gut eingebettet und es bildet sich ein fester (Faser-)Verbund.

Für einen zusätzlichen Schutz v.a. vor Witterungseinflüssen der erfindungsgemäßen Wanne kann es vorteilhaft sein, dass die Außenseite der Wanne eine Deckschicht aufweist. Dadurch ist es auch möglich, die Optik der Außenseite der Wanne zu verändern; beispielsweise kann die Deckschicht farblich beliebig gestaltet werden. Gemäß einem einfachen Merkmal ist die Deckschicht aus Kunststoff, vorzugsweise aus einem Kunststoffvlies, gebildet. Es versteht sich von selbst, dass die Deckschicht bevorzugterweise dünner gestaltet ist als das Verbundmaterial der Wanne, wobei sich die Dicke der Deckschicht in µm-Bereichen bewegen kann.

In Bezug auf eine verbesserte Stabilität der erfindungsgemäßen Wanne kann es bevorzugt sein, die Wanne mit zumindest einer Verstärkungsrille und/oder mit zumindest einer Sicke zu versehen. Die Anordnung der zumindest einen Rille bzw. Sicke kann je nach Anforderungen beliebig gewählt werden. Vorteilhafterweise ist die zumindest eine Verstärkungsrille und/oder Sicke am Boden der Wanne angeordnet. Falls gewünscht, kann die Wanne auch mehrere Verstärkungsrillen und/oder Sicken aufweisen.

Die vorstehend genannte Aufgabe wird erfindungsgemäß dadurch gelöst, dass ein Verfahren zur Herstellung einer Wanne aus Verbundstoff zur Aufnahme von Solar- oder Photovoltaikelementen geschaffen wird, wobei etwa 5 % bis etwa 90 % pflanzliche Fasern, vorzugsweise unter Temperatureinfluss, verpresst werden.

Pflanzliche Fasern sind kostengünstig und sehr leicht zu verarbeiten. Dadurch ist für das erfindungsgemäße Verfahren im Vergleich zur Herstellung einer Wanne aus Aluminium nur mehr etwa 10 % des Energieaufwands erforderlich. Auch ist ein z.B. im Vergleich zu Polycarbonat niedrigerer Verformungsdruck zur Formung der Wanne erforderlich. Der Verformungsdruck zur Formung der erfindungsgemäßen Wanne kann bei weniger als 5 bis 30 kp/cm² liegen.

Es hat sich gezeigt, dass ein Anteil von pflanzlichen Fasern von etwa 40 % bis etwa 70 % bevorzugt sein kann, noch bevorzugter von etwa 60 %.

Zur Herstellung einer stabilen Wanne ist es von Vorteil, wenn die pflanzlichen Fasern zu einem Faservlies verpresst werden. Wie an sich bekannt, handelt es sich bei einem Vlies um fest miteinander verbundene Fasern. Die Fasern werden zur Bildung des Faservlies vernadelt und stellen sodann ein strapazfähiges Halbprodukt (Faserflor) dar, das weiter, z.B. thermisch, mechanisch oder chemisch verfestigt werden kann. Beispielsweise kann aus den Fasern zunächst ein loser Flor gebildet werden, aus dem in einem kontinuierlichen Verfahren durch Wärme und Druck ein fertiges Vlies gebildet wird. Das Faservlies kann im Vorliegenden mit Wasser besprüht und anschließend in einer Formpresse unter entsprechender Temperatureinwirkung verfestigt und verformt werden.

Es ist günstig, den pflanzlichen Fasern und/oder dem Faservlies zumindest ein weiteres, geeignetes Material zum verbesserten Informhalten der Wanne beizugeben. Dabei hat es sich gezeigt, dass die Zugabe von thermoplastischem oder duroplastischem Material besonders gut geeignet ist, wobei etwa 5 % bis etwa 90 % pflanzliche Fasern mit thermoplastischem Material oder duroplastischem Material verpresst werden. Am bevorzugtesten ist ein Anteil von etwa 40 % bis etwa 70 %, insbesondere von etwa 60 % an pflanzlichen Fasern.

Beispielsweise ist es möglich, ein Faservlies aus pflanzlichen Fasern zu bilden und anschließend thermoplastisches Material zuzugeben. Alternativ dazu kann das thermoplastische Material in Form von Fasern oder Fäden bereitgestellt werden, die gemeinsam mit den pflanzlichen Fasern verpresst werden. Es ist aber auch denkbar, dass einem Verbund-Faservlies, d.h. einem Vlies aus pflanzlichen Fasern und Kunststoff-Fäden, vorzugsweise Thermoplast-Fäden, zusätzlich thermoplastisches Material zuzugeben. In letzterem Fall ist der Anteil an Kunststoff- bzw. thermoplastischen Fäden günstigerweise geringer.

Durch die Zugabe von thermoplastischem Material können die pflanzlichen Fasern auf einfache Weise in Verbund gebracht werden und einen Verbundstoff bilden. Aufgrund der leichten Verarbeitbarkeit der Materialien ist die Herstellung der Wanne wenig aufwendig und daher besonders kostengünstig. Mithilfe des thermoplastischen Materials kann der Verbundstoff (aus pflanzlichen Fasern und Thermoplast) im Vergleich zu anderen Verbundmaterialien relativ dünn gehalten werden, aber dennoch aufgrund der positiven Eigenschaften des Verbundstoffs eine selbsttragende und stabile Wanne bilden.

Nach einem einfachen Merkmal ist es von Vorteil, wenn das Faservlies bzw. der Verbundstoff heißgepresst und/oder formgepresst wird. Bei einer Verwendung von thermoplastischem Material als zweite Komponente des Verbundstoffs für die Wanne kann es bevorzugt sein, ein aus pflanzlichen Fasern und Thermoplast-Fäden gebildetes (Verbund-)Faservlies heranzuziehen. Beim Heiß- bzw. Heizpressen können die Thermoplast-Fäden bis zu ihrem Schmelzpunkt erwärmt werden, ohne dass die pflanzlichen Fasern darunter leiden, da diese vom thermoplastischen Material umgeben bzw. umschlossen werden können. Die einzelnen Fasern können somit auf einfache Weise und mit ausgezeichnetem Ergebnis miteinander verbunden werden. Dieses thermische Verbinden kann durch gleichmäßiges Beaufschlagen von Wärme und Druck über den gesamten Bereich erreicht werden oder durch unterbrochenes Beaufschlagen von Wärme und Druck, so dass nur diskrete Bereiche verbunden werden. Ein solches diskretes Verbinden schafft Punktverbindungen zwischen den Fasern bzw. Fäden, die aber dennoch einen festen Zusammenhalt der einzelnen Fasern bzw. Fäden gewährleisten können, da der Faserverbund durch eine Art Vernetzung der einzelnen Fasern bzw. Fäden gebildet ist. Das Heißpressen kann in einer an sich bekannten Heißpresse bzw. Heizpresse vorgenommen werden.

Besonders im Falle einer Heißpressung des Faservlies bzw. des Verbundstoffs mit thermoplastischem Material ist es von Vorteil, eine anschließende Formpressung zum Informbringen der Wanne vorzunehmen. Dabei kann eine kalte Formpressung bevorzugt sein, so dass sich eine Aushärtung des thermoplastischen Materials rasch einstellen kann und die so gebildete Wanne zur weiteren Verarbeitung bzw. Montage sogleich benutzt werden kann. Beispielsweise kann dies mithilfe von kaltem Formwerkzeug oder auch mithilfe einer Wasserkühlung vorgenommen werden. Selbstverständlich kann die Wanne alternativ zum Kalt-Formpressen auch warm-gepresst werden und anschließend ausgekühlt werden.

Nach einer noch einfacheren und kostengünstigeren Herstellung kann das Faservlies oder der Verbundstoff zum Informbringen der Wanne tiefgezogen werden, wobei eine Temperatur von etwa 120°C bis 150°C und ein Druck/eine Kraft von etwa von 5 bis 35 kp/cm² aufgebracht werden kann.

Es hat sich gezeigt, dass sich die Verwendung von Polypropylen und/oder Polyethylen als thermoplastisches Material besonders gut eignet, insbesondere wenn die pflanzlichen Fasern gemeinsam mit Kunststoff-Fäden zu einem Faservlies verbunden werden sollen.

Gemäß einem weiteren Merkmal der Erfindung können die pflanzlichen Fasern zur Bildung des Faservlies mit duroplastischem Material beleimt werden. Dabei können die einzelnen pflanzlichen Fasern beleimt und daraus anschließend ein Faservlies gebildet werden. Zusätzlich oder auch alternativ dazu kann das gebildete Faservlies mit duroplastischem Material beleimt werden.

Auch bei der Verwendung von duroplastischem Material hat es sich als günstig erwiesen, das Faservlies bzw. den Verbundstoff formzupressen. Dabei kann das Faservlies mit Duroplast einzeln beleimte Pflanzenfasern aufweisen, wobei das gebildete Faservlies auch zusätzlich beleimt werden kann, und anschließend in Wannenform formgepresst und/oder heißgepresst werden. Hierbei wird vorteilhafterweise eine Temperatur von etwa 140 °C bis etwa 210 °C aufgebracht. Auch hier kann eine anschließende Kühlung der Wanne vorgenommen werden, beispielsweise mittels Luft oder wassergekühlter Platten oder Formen.

Es sei bemerkt, dass sich bei der Verwendung von duroplastischem Material auch Tiefziehen zur Herstellung der Verbundwanne eignet.

Es hat sich gezeigt, dass die Verwendung von Epoxidharz als duroplastisches Material besonders vorteilhaft ist. Es können auch andere Duroplasten eingesetzt werden, wie beispielsweise Phenolharz, insbesondere Phenol-Formaldehydharz (PF-Harz), Harnstoff-Formaldehyd (UF-Harz), Melamin-Formaldehyd-Harz (MF-Harz), Polyester-Harz (UP-Harz), Harze der Grundmonomere, wie Acrylnitril, Butadien, Styrol.

Weiters hat es sich als günstig erwiesen, den pflanzlichen Fasern oder dem Faservlies Additive, wie beispielsweise Borsalze, beizumengen. Dadurch kann die Witterungsbeständigkeit der hergestellten Wanne verbessert werden und eine biozide Wirkung, insbesondere fungizide, algizide und bakterizide Wirkung, geschaffen werden.

Ein Schutz der Wanne vor Witterungseinflüssen kann auch damit geschaffen werden, dass auf die Wanne eine Deckschicht aufgebracht wird. Dies kann im Prinzip nach Formung der Wanne vorgenommen werden. Für einen festen Halt der Deckschicht ist es jedoch bevorzugt, auf eine Seite des Faservlies ein Deckvlies zur Bildung einer Deckschicht an der Außenseite der Wanne aufzubringen. Dabei ist es möglich, das Faservlies gleichzeitig mit dem Deckvlies zu bilden oder aber auch auf das bereits gebildete Faservlies aufzubringen, was beispielsweise durch Auflegen oder Aufnadeln vorgenommen werden kann. Als Material für die Deckschicht hat sich Polyester, inbesondere Polyestervlies, gut bewährt. Die Deckschicht oder das Deckvlies kann eine beliebige Farbgebung aufweisen, um so die Außenseite der Wanne optisch zu verändern.

### Beispiele:

### Beispiel 1:

Es wurde eine erfindungsgemäße Wanne aus einem Verbundstoff umfassend pflanzliche Fasern in einer Größe von 1200 x 2250 x 90 mm hergestellt. Eine Mischung aus Flachs- und Kenaf-Fasern wurde gemeinsam mit niederschmelzenden thermoplastischen Polypropylen-Fasern (PP-Fasern) 10 - 60 % mittels Kaltnadeln zu einem etwa 4 m² (1550 x 2600 mm) großen Faservlies vernadelt. Das Faservlies hatte eine Dicke von etwa 10 mm, ein Flächengewicht von etwa 2200 g/m², d.h. ein Gesamtgewicht von etwa 8 bis 9 kg, und einen Anteil von etwa 40 - 90 % pflanzlichen Fasern.

Das Faservlies wurde in eine Thermoformanlage bestehend aus Heizstation und Formpresse, die durch entsprechende Beschickungs-, Förder- und Entleereinrichtungen miteinander verbunden sind, eingebracht.

Die Heizpresse war mit zwei elektrisch beheizten Heizplatten bzw. Heizstempeln ausgestattet, die bis etwa 200 bis 250° C erwärmbar war. Über ein Zuführband und ein um den Presstisch laufendes Polytetrafluorethylen-Band (PTFE bzw. Teflon) wurde das Faservlies zu den Heizplatten bewegt. Der Oberholm der Heizpresse war ebenfalls mit Teflon beschichtet, um unerwünschte Verklebungen während des Aufheizens des Faservlies zu vermeiden. Das Faservlies wurde mittels der Heizstempeln bei etwa 150° C, bei einem Druck von etwa 600 kN und einem Hub von etwa 500 mm heizgepresst, wodurch das Faservlies nicht nur eine Pressung, sondern auch gleichzeitig eine vollständige Durchwärmung erfuhr. Die einzelnen Fasern konnten miteinander verschmelzen und einen festen Verbundstoff bilden.

Nach erfolgter Heißpressung wurde der noch warme Verbundstoff mittels eines Greifersystems zur Formpresse bewegt. Die Formpresse war mit entsprechendem Formwerkzeug aus Aluminium bestückt, das rasche Presszyklen erlaubte. Dies wurde dadurch erreicht, dass das Formwerkzeug mit Bohrungen für eine Wasserkühlung versehen worden war. Bei Betätigung der Formpresse wurde der Verbundstoff zu einer Wanne geformt. Dabei wurde ein Druck von 1200 kN und ein Hub von 1200 mm aufgebracht. Der Verformungsdruck lag bei 10 kp/cm². Mithilfe der Bohrungen wurde bei Betätigung der Stempel gleichzeitig die Wasserkühlung aktiviert, so dass eine rasche Abkühlung des Verbundstoffs erfolgen konnte. Nach erreichter Form- und Abkühlzeit wurde die so erhaltene Wanne der Formpresse entnommen (automatisch) und für die weitere Montage gelagert.

Zur Veranschaulichung der Isolierwirkung der erfindungsgemäßen Wanne wurde eine Wanne aus Aluminium gleicher Größe mit einer Wandstärke von 0,8 mm hergestellt. Die Wannen wurden hinsichtlich ihres Wärmedurchlasswiderstandes D (m²K/W) getestet:

| | |
|---|---|
| D-Wert Verbundstoff | senkrecht 0,3928 |
| | waagrecht 1,277 |
| D-Wert Aluminium | senkrecht 0,3658 |
| | waagrecht 1,0638 |

Die Verbundstoff-Wanne zeigte eine wesentlich bessere Isolierwirkung als die Aluminium-Wanne.

Es sei bemerkt, dass die Heizpresse auch mit anderen Heizmitteln, wie beispielsweise Thermoöl, Heißwasser oder Dampf, beheizt werden kann.

Weiters kann auch das Formwerkzeug bei hohen Stückzahlen zur Reduzierung von Verschleiß aus Stahl gefertigt werden.

### Beispiel 2:

Es wurde eine weitere Wanne aus Verbundstoff mit pflanzlichen Fasern hergestellt, wobei das Faservlies im Unterschied zum Beispiel 1 nur aus pflanzlichen Fasern (ohne Kunststoff) gebildet worden ist. Im Einzelnen wurden Flachs-Kenaf-Sisal-Hanf Fasern in verschiedenen Mischungen je nach Verfügbarkeit zu einem Faservlies vernadelt. Das Faservlies hatte ebenfalls eine Fläche von 4 m² mit einem Flächengewicht von etwa 2.200 g/m² ohne thermoplastische Fasern. Das Faservlies wurde auf die entsprechende Wannengröße zugeschnitten und mit Epoxidharz durch Vakuum-Verdichtung mit einem Anteil von 5 - 35 % beleimt.

Das Faservlies wurde in eine beheizbare Formpresse eingebracht und bei einer Temperatur von etwa 120 - 210 °C direkt in die Wannenform mit einem Druck von etwa 10 - 40 kp/cm2 gepresst. Beim Pressvorgang wurden einige Druckentlastungsperioden zur Ableitung entstehenden Dampfes eingebaut.

Auch bei dieser Verbundstoff-Wanne konnten ausgezeichnete Werte des Wärmedurchlasswiderstands D und damit der isolierenden Wirkung der Wanne erzielt werden, da die Dichte und Porosität des Materials identisch mit jenen des Beispiels 1 waren.

### Beispiel 3:

Es wurde eine weitere Wanne aus Verbundstoff mit pflanzlichen Fasern hergestellt, wobei das Faservlies im Unterschied zum Beispiel 1 nur aus pflanzlichen Fasern (ohne Kunststoff) gebildet worden ist. Im Einzelnen wurden die pflanzlichen Fasern wie Flachs-Kenaf-Sisal-Hanf in einer Faserbeleimeinrichtung mit Phenolharz beleimt, anschließend abgetrocknet und zu einem Faservlies vernadelt. Das Faservlies hatte ebenfalls eine Fläche von 4 m². Das Faservlies wurde auf die entsprechende Wannengröße zugeschnitten und wie im Beispiel 2 in der Heizpresse in die Wannenform gepresst und ausgehärtet.

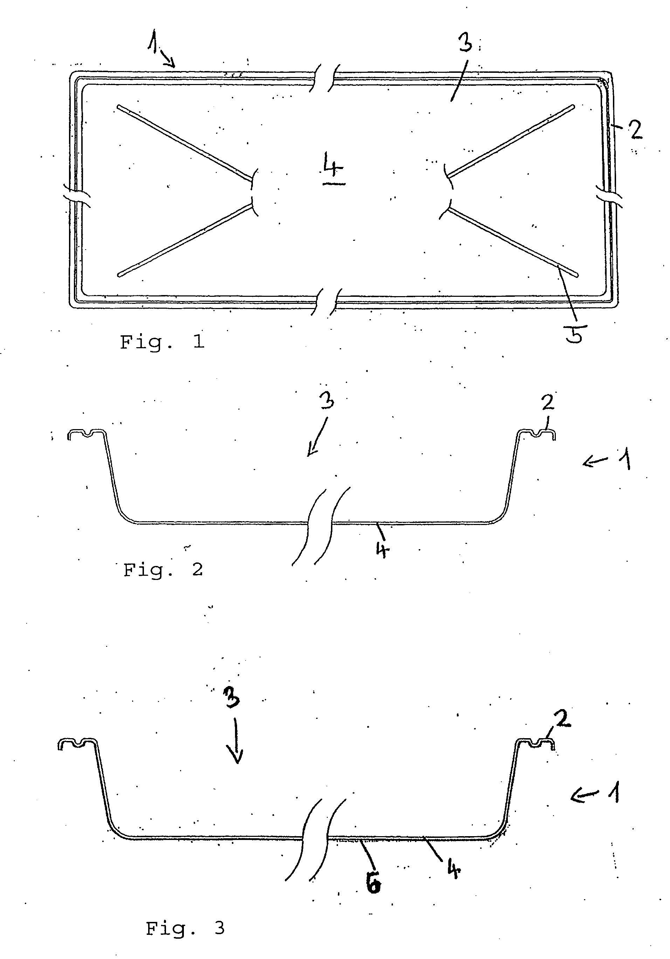

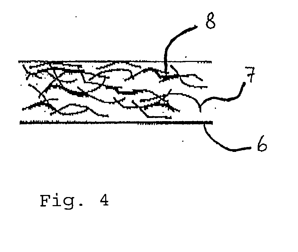

Die Erfindung wird weiters anhand von in den beiliegenden Zeichnungen gezeigten Ausführungsbeispielen näher erläutert: dabei zeigen Fig. 1 eine Draufsicht auf eine erfindungsgemäße Wanne zur Aufnahme von Solar- oder Photovoltaikelementen; Fig. 2 eine Schnittansicht der Wanne gemäß Fig. 1; Fig. 3 eine Schnittansicht einer erfindungsgemäßen Wanne mit einer Deckschicht; und Fig. 4 eine Schnittansicht durch den Verbundstoff der Wanne.

Fig. 1 zeigt eine schematisch dargestellte Wanne 1 aus Verbundstoff gemäß der Erfindung in der Draufsicht. Die Wanne weist einen umlaufenden, nach außen weisenden Rand 2 und eine zentrale Vertiefung 3 auf. Am Boden 4 der Vertiefung 3 sind vier Sicken 5 ausgebildet, die zur zusätzlichen Versteifung der Wanne 1 vorgesehen sind.

Fig. 2 zeigt die erfindungsgemäße Wanne schematisch in der Schnittansicht. Wie ersichtlich, ist der Rand 2 der Wanne 1 U-förmig ausgebildet und weist an seiner Oberseite eine zentrale Nut auf, die zur Montage der Wanne 1 und für diverse Anschlüsse ausgebildet ist.

Fig. 3 zeigt wie die Fig. 2 eine schematisch dargestellte Wanne 1 in der Schnittansicht, die im Unterschied zur Wanne 1 gemäß Fig. 1 und 2 eine Deckschicht 6 an ihrer Außenseite aufweist. Die Deckschicht 6 ist bis zum Rand 2 der Wanne 1 aufgebracht, so dass die gesamte Wanne 1 inklusive ihrer Randunterseite vor Witterungs- und vor Fungizideinflüssen geschützt ist.

Fig. 4 zeigt eine schematische Darstellung des Materials der Wanne in der Schnittansicht. Die Pflanzenfasern 7 sind mit thermoplastischem Material 8, beispielsweise Polypropylen, durch einen Pressvorgang unter Einwirkung von Temperatur miteinander verbunden und bilden so einen festen Verbund. An der Unterseite des Verbundstoffs ist eine Deckschicht 6 angeordnet, die aus einem Deckvlies, beispielsweise aus einem Polyestervlies, gemeinsam mit dem Verbundstoff gebildet worden ist.

Die erfindungsgemäße Wanne 1 ist selbsttragend und weist vorteilhafterweise Steckverbindungen für Anschlüsse auf. Dadurch ist sie besonders einfach in der Montage. Weiters kann die Wanne Öffnungen, beispielsweise für einen Kondenswasserabfluss, aufweisen.

Die erfindungsgemäße Wanne 1 kann aus mehrheitlich pflanzlichen Fasern und aus einem thermoplastischen und/oder duroplastischen Material bestehen. Vorzugsweise werden die pflanzlichen Fasern 7 in einer Größe (d.h. Titer bzw. Faserstärke) von Piko für die Bildung des Faservlies verwendet. Selbst bei pflanzlichen Fasern 7 in dieser Feinheit kann ein stabiler und beständiger Verbundstoff für die Wanne 1 bereitgestellt werden.

Die Materialien der erfindungsgemäßen Wanne und die erfindungsgemäße Herstellung gestatten eine Reduzierung der Form- bzw. Biegeradien bei Bildung der Solar- bzw. Photovoltaikwanne um etwa 50 %. Damit kann das Netto/Brutto-Verhältnis der Absorberflächen zur Baugröße der Elemente von 1:1,15 auf ein Verhältnis von 1:1,09 abgesenkt werden. Diese Verlustflächenreduzierung von etwa 6 % wirkt sich auf alle Bauteile, die zur Einbettung der Absorberelemente, Metallrahmen, Isolierung, Glas, etc. erforderlich sind, aus. Dadurch kann eine größere Leistungsdichte pro Flächeneinheit erhalten werden.

## Patentansprüche

1. Wanne (1) aus Verbundstoff zur Aufnahme von Solar- oder Photovoltaikelementen, **dadurch gekennzeichnet, dass** der Verbundstoff etwa 5 bis etwa 90 % pflanzliche Fasern (7) aufweist.

2. Wanne nach Anspruch 1, **dadurch gekennzeichnet, dass** der Verbundstoff etwa 40 bis etwa 70 %, vorzugsweise etwa 60 %, pflanzliche Fasern (7) aufweist.

3. Wanne nach Anspruch 1 oder 2, **dadurch gekennzeichnet, dass** der Verbundstoff durch ein gepresstes Faservlies gebildet ist.

4. Wanne nach einem der Ansprüche 1 bis 3, **dadurch gekennzeichnet, dass** die pflanzlichen Fasern (7) ausgewählt sind aus der Gruppe bestehend aus Flachs, Hanf, Sisal, Kenaf, Jute, Holz, Kokos und aus einer Mischung daraus.

5. Wanne nach einem der Ansprüche 1 bis 4, **dadurch gekennzeichnet, dass** der Verbundstoff thermoplastisches Material (8), vorzugsweise Polypropylen und/oder Polyethylen, oder duroplastisches Material, vorzugsweise Epoxidharz und/oder Phenolharz, aufweist.

6. Wanne nach einem der Ansprüche 1 bis 5, **dadurch gekennzeichnet, dass** die Außenseite der Wanne (1) eine Deckschicht (6), vorzugsweise aus einem Kunststoff-Deckvlies, aufweist.

7. Verfahren zur Herstellung einer Wanne (1) aus Verbundstoff zur Aufnahme von Solar- oder Photovoltaikelementen, **dadurch gekennzeichnet, dass** etwa 5 bis etwa 90 % pflanzliche Fasern (7), vorzugsweise unter Temperatureinfluss, verpresst werden.

8. Verfahren nach Anspruch 7, **dadurch gekennzeichnet, dass** pflanzlichen Fasern (7) ausgewählt aus der Gruppe bestehend aus Flachs, Hanf, Sisal, Kenaf, Jute, Holz, Kokos und aus einer Mischung daraus verwendet werden.

9. Verfahren nach Anspruch 7 oder 8, **dadurch gekennzeichnet, dass** die pflanzlichen Fasern (7) zu einem Faservlies verpresst werden.

10. Verfahren nach einem der Ansprüche 7 bis 9, **dadurch gekennzeichnet, dass** den pflanzlichen Fasern (7) oder dem Faservlies thermoplastisches Material (8), vorzugsweise Polypropylen- und/oder Polyethylen, oder duroplastisches Material, vorzugsweise Epoxidharz und/oder Phenolharz, zugegeben wird.

11. Verfahren nach einem der Ansprüche 7 bis 10, **dadurch gekennzeichnet, dass** etwa 5 % bis etwa 90 %, vorzugsweise 60 %, pflanzliche Fasern (7) mit thermoplastischem Material (8) oder duroplastischem Material verpresst werden.

12. Verfahren nach einem der Ansprüche 7 bis 12, **dadurch gekennzeichnet, dass** die pflanzlichen Fasern (7) mit Fäden aus thermoplastischem Material (8) verpresst werden.

13. Verfahren nach einem der Ansprüche 7 bis 12, **dadurch gekennzeichnet, dass** die pflanzlichen Fasern (7) oder das Faservlies mit duroplastischem Material beleimt und verpresst werden.

14. Verfahren nach einem der Ansprüche 7 bis 13, **dadurch gekennzeichnet, dass** der Verbundstoff oder das Faservlies heißgepresst und/oder formgepresst oder tiefgezogen wird.

15. Verfahren nach einem der Ansprüche 7 bis 14, **dadurch gekennzeichnet, dass** den pflanzlichen Fasern (7) oder dem Faservlies Additive, vorzugsweise Borsalze, beigemengt werden.

16. Verfahren nach einem der Ansprüche 8 bis 15, **dadurch gekennzeichnet, dass** auf einer Seite des Faservlies ein Deckvlies zur Bildung einer Deckschicht (6) an der Außenseite der Wanne (1) aufgebracht wird.

17. Wanne aus Verbundstoff zur Aufnahme von Solar- oder Photovoltaikelementen, **dadurch gekennzeichnet, dass** die Wanne nach einem der Ansprüche 7 bis 16 hergestellt ist.
